# EUROPÄISCHE PATENTANMELDUNG

(11) **EP 2 112 441 A2**
(43) Veröffentlichungstag der Anmeldung: **28.10.2009**
(21) Anmeldenummer: 09005521.1
(22) Anmeldetag: 20.04.2009
(51) Int. Cl.: F24J 2/24, F24J 2/46, F24J 2/05

(54) **Solarabsorber und zugehöriger Solarkollektor**

(30) Priorität: 21.04.2008 DE 102008021302; 19.07.2008 DE 102008033837
(71) Anmelder: Joma-Polytec Kunststofftechnik GmbH, 72411 Bodelshausen (DE)
(72) Erfinder: Heinz, Stefan, 72411 Bodelshausen (DE); Müller, Axel, Dr., 79102 Freiburg (DE); Woelki, Wolfgang, 72414 Rangendingen (DE)
(74) Vertreter: Dreiss

(57) **Zusammenfassung**

Solarabsorber (10,40,200) mit einem Absorberrohr (12,120) und wenigstens einen im Absorberohr (12,20) vorgesehenen Innenkörper (14,42,140) umfassend wenigstens einen Leitabschnitt (18,20,44,160) zur Durchmischung eines zwischen dem Absorberrohr (12,120) und dem Innenkörper (14,42,140) hindurchströmenden Wärmeträgers.

## Beschreibung

Die Erfindung betrifft einen Solarabsorber sowie einen Solarkollektor mit derartigen Solarabsorbern.

Aus dem Stand der Technik sind Solarabsorber bekannt, die Wärmemittel führende Absorberrohre umfassen. Das Wärmemittel wird dabei in den Absorberrohren aufgrund von Sonneneinstrahlung erwärmt.

Der vorliegenden Erfindung liegt die Aufgabe zugrunde, einen Solarabsorber mit einem Absorberrohr beziehungsweise einen Solarkollektor mit zugehörigen Solarabsorbern vorzuschlagen, der einen besseren Wirkungsgrad erzielt.

Diese Aufgabe wird durch einen Solarabsorber mit den Merkmalen des Anspruchs 1 gelöst. Ein solcher Solarabsorber umfasst ein Absorberrohr und wenigstens einen im Absorberrohr vorgesehenen Innenkörper, sowie wenigstens einen Leitabschnitt zur Durchmischung eines zwischen dem Absorberrohr und dem Innenkörper hindurchströmenden Wärmeträgers. Durch Vorsehen der Leitabschnitte wird eine bessere Durchmischung des Wärmemittels erreicht, als bei herkömmlichen Solarabsorbern, die lediglich ein Absorberrohr, in dem das Wärmemittel geführt wird, aufweisen. Aufgrund der Durchmischung wird eine homogenere Verteilung der Wärme im Wärmemittel erzielt. Insgesamt wird dadurch der Wirkungsgrad des Solarabsorbers erhöht.

Vorzugsweise erstreckt sich der Innenkörper über die gesamte Länge des Absorberrohrs. Dabei ist denkbar, dass, falls mehrere Innenkörper vorgesehen sein sollten, diese sich dann vorzugsweise über die gesamte Länge des Absorberrohrs erstrecken.

Vorteilhafterweise ist vorgesehen, dass der Leitabschnitt oder mehrere Leitabschnitte entlang einer um die Mittellängsachse gewendelten Linie angeordnet sind. Gerade durch eine solche Anordnung wird eine gute Durchmischung des Wärmemittels erzielt.

Besonders vorteilhaft ist, wenn der Innenkörper als koaxial zum Absorberrohr verlaufendes Innenrohr ausgebildet ist. Hierdurch wird gewährleistet, dass der Zwischenraum zwischen Innenrohr und Absorberrohr in Umfangsrichtung konstant ist.

Besonders bevorzugt ist, wenn der Innenkörper, der wenigstens eine Leitabschnitt und das Absorberrohr einstückig ausgebildet sind. Der Solarabsorber ist dabei vorzugsweise aus einem Kunststoff und im Extrusionsverfahren hergestellt.

Vorteilhafterweise können die Leitabschnitte am Absorberrohr und/oder am Innenrohr angeordnet und derart ausgebildet sein, dass eine definierte Anordnung des Innenkörpers im Absorberrohr gewährleistet wird. Insbesondere kann das Innenrohr im Absorberrohr, falls dieses als eigenständiges Bauteil ausgebildet ist, zentriert angeordnet sein.

Eine bevorzugte Ausführungsform ergibt sich dadurch, dass der Innenkörper einen zylindrischen Grundkörper zur Bildung eines ringartigen Spalts zwischen dem Absorberrohr und dem Innenkörper aufweist und dass die Leitabschnitte zwischen dem Grundkörper und dem Absorberrohr als nach radial außen gerichtete Erhebungen ausgebildet sind. Vorzugsweise ist dabei der Grundkörper und das Absorberrohr kreiszylindrisch ausgebildet. Die Leitabschnitte können dann am Grundkörper insbesondere symmetrisch oder auch zyklisch symmetrisch angebracht sein.

Insbesondere sind die Erhebungen derart am Grundkörper angeordnet, dass sie im Querschnitt durch den Grundkörper bezüglich der Mittellängsachse des Grundkörpers jeweils im Bereich zwischen 30° und 120° und insbesondere im Bereich von 90° zueinander versetzt angeordnet sind.

Die Erhebungen können dabei auf einer gemeinsamen Umfangslinie des Grundkörpers liegen. Vorteilhafterweise sind die Erhebungen aber entlang einer auf der Oberfläche des Grundkörpers wendelartig verlaufenden Linie vorgesehen.

Vorzugsweise erstreckt sich die Längsrichtung der Erhebungen parallel zur Mittellängsachse des Grundkörpers. Die Erhebungen können dabei im Längsschnitt insbesondere keil- oder rampenartig ausgebildet sein. Dadurch kann erreicht werden, dass das Wärmemittel entlang des Keil-oder Rampenabschnitts der Erhebung mehr oder weniger tangential vom Grundkörper in Richtung des Absorberrohrs geführt wird. Die keil- oder rampenartig ausgebildeten Erhebungen können dabei vorzugsweise eine konstante Steigung aufweisen.

Ferner ist vorteilhaft, wenn die Erhebungen in zur Mittellängsachse senkrecht verlaufender Draufsicht eine rechteckige, trapezartige oder dreieckige Kontur aufweisen. Hierdurch kann ein vorteilhaftes Anströmverhalten bei gleichzeitig guter Durchmischung des Wärmemittels erreicht werden.

Vorteilhafterweise sind sämtliche Kanten und Ecken der Erhebungen abgerundet.

Bei einer anderen bevorzugten Ausbildung der Erfindung ist vorgesehen, dass der Leitabschnitt oder die Leitabschnitte wenigstens abschnittsweise als Schaufel- oder Wendelstreifen ausgebildeten sind. Die Wendelabschnitte als solche sind vorteilhafterweise derart ausgebildet, dass sie zwischen dem Innenkörper und dem Absorberrohr in radialer Richtung verlaufend angeordnet sind. Insbesondere die Verwendung von gewendelten Streifen hat den Vorteil, dass eine gute Durchmischung bei vergleichsweise homogenem Strömungsprofil des Wärmemittels im Absorberrohr erreicht werden kann.

Zur Erzielung der wendelung kann vorgesehen sein, dass der Solarabsorber bzw. das die wendelung aufweisende Bauteil, falls es im Extrusionsverfahren hergestellt wird, direkt nach Verlassen der Extrusionsmatrize derart um seine Mittellängsachse verdreht wird, dass der um die Mittellängsachse gewendelte Verlauf der Wendelstreifen entsteht.

Eine vorteilhafte Ausgestaltung der Erfindung sieht vor, dass die Wandungsstärken eines als Innenrohr ausgebildeten Innenkörpers, des Absorberrohrs und des wenigstens einen Wendelabschnitts wenigstens weitgehend gleich sind. Auch hierdurch ergibt sich eine vergleichsweise homogene Wärmeverteilung im Solarabsorber.

Ferner ist denkbar, dass der wenigstens eine Wendelstreifen Durchbrüche oder Aussparungen zum Durchtritt für den Wärmeträger aufweist. Hierdurch kann ein Wärmeträgeraustausch zwischen den durch die Wendelstreifen abgetrennten Wendelsegmenten erfolgen.

Gemäß der Erfindung ist es zudem denkbar, dass mehrere Wendelstreifen vorgesehen sind, die weitgehend parallel zueinander um die Mittellängsachse gewendelt verlaufen.

Für den Fall, dass der Solarabsorber beziehungsweise dessen Einzelteile aus Kunststoff gebildet sind, ist vorteilhaft, wenn der Kunststoff Additive zur verbesserten Absorptionsfähigkeit von Sonneneinstrahlungen und/oder Wärmeleitfähigkeit aufweist. Insbesondere ist vorteilhaft, wenn, wie bereits erwähnt, der Solarabsorber einstückig aus ein und demselben Kunststoff hergestellt ist. Allerdings ist auch denkbar, dass der Innenkörper samt den Leitabschnitten beziehungsweise Erhebungen als separat handhabbares Bauteil ausgebildet sein kann.

An den freien Enden des Innenkörpers können konusartige Anströmabschnitte, die insbesondere als separate Bauteile ausgebildet sind, vorhanden sein. Hierdurch ergibt sich ein günstiges Anströmverhalten beziehungsweise der Wärmeträger wird hierdurch auf günstige Art und Weise in den Spalt zwischen dem Außenrohr und dem Innenkörper geleitet.

Die eingangs genannte Aufgabe wird auch durch einen Solarkollektor gelöst, der ein Gehäuse umfasst und wenigstens abschnittsweise im Gehäuse untergebrachte erfindungsgemäße Solarabsorber vorsieht.

Vorteilhafterweise können wenigstens einige Leitabschnitte zur Zentrierung des Innenkörpers im Absorberrohr derart ausgebildet sein, dass sie an der Innenwandung des Absorberrohrs anliegen. Insofern können Befestigungsmittel zur definierten Anordnung des Innenkörpers im Absorberrohr entfallen.

Weitere Einzelheiten und vorteilhafte Ausgestaltungen der Erfindung sind der nachfolgenden Beschreibung zu entnehmen, anhand derer die in den Figuren dargestellten Ausführungsbeispiele näher erläutert und beschrieben sind.

Es zeigen:
- Figur 1: eine perspektivische Ansicht auf einen ersten erfindungsgemäßen Solarabsorbers;
- Figur 2: eine Seitenansicht des Solarabsorbers gemäß Figur 1;
- Figur 3: die Draufsicht auf den Solarabsorber gemäß Figur 1 und 2;
- Figur 4: den Innenkörper des Solarabsorbers gemäß Figur 1, 2 und 3;
- Figur 5: einen zweiten erfindungsgemäßen Solarabsorber;
- Figur 6: einen dritten erfindungsgemäßen Solarabsorber in perspektivischer Ansicht;
- Figur 7: das freie Ende des Solarabsorbers gemäß Figur 6 in vergrößerter Ansicht; und
- Figur 8: das freie Ende des Solarabsorbers gemäß Figur 6 ohne einen aufgesetzten Endabschnitt.

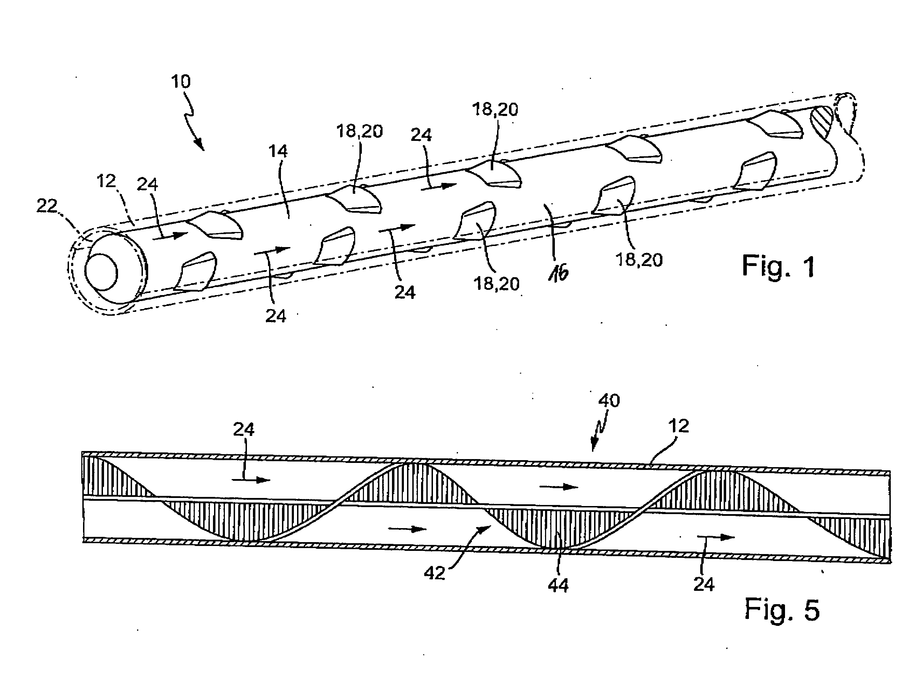

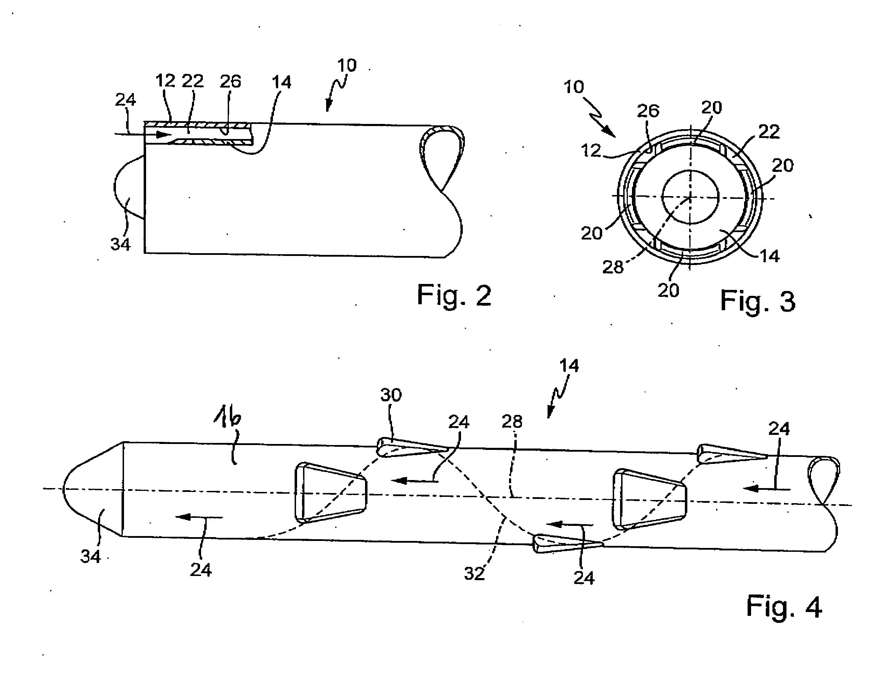

In der Figur 1 ist ein Solarabsorber 10 mit einem zylindrischen Absorberrohr 12 und einem im Absorberrohr 12 angeordneten Innenkörper 14 dargestellt. Der Innenkörper 14 umfasst dabei einen zylindrischen Grundkörper 16, auf dem eine Vielzahl von Leitabschnitten 18 in Form von Erhebungen 20 angeordnet sind. Der einen kreiszylindrischen Querschnitt aufweisende Grundkörper 16 bildet einen ringartigen Spalt 22, der in Figur 2 gut sichtbar ist, zwischen ihm und dem Absorberrohr 12. Durch diesen Spalt strömt in Richtung des Pfeils 24 im Betrieb des Solarabsorbers 10 ein Wärmemittel, insbesondere in Form einer Flüssigkeit.

Wie aus insbesondere Figur 3 deutlich wird, sind die Erhebungen 20 derart ausgebildet, dass sie an der Innenwandung 26 des Absorberrohrs 12 zur Zentrierung des Innenkörpers 14 im Absorberrohr 12 anliegen.

Wie insbesondere aus Figur 3 und 4 deutlich wird, sind die Erhebungen 20 im Querschnitt bezüglich der Mittellängsachse 28 um jeweils 90° zueinander versetzt angeordnet. Wie insbesondere aus Figur 4 deutlich wird, sind die Erhebungen 20 im Längsschnitt beziehungsweise in der Seitenansicht keilartig ausgebildet und weisen eine in Strömungsrichtung 24 schräg nach radial außen verlaufende Rampe 30 auf. Die jeweiligen Rampen 30 der einzelnen Erhebungen 20 weisen dabei eine weitgehend konstante Steigung auf.

Wie insbesondere aus Figur 4 deutlich wird, weisen die einzelnen Erhebungen in senkrecht zur Mittellängsachse 28 verlaufender Draufsicht die Kontur eines gleichschenkligen Trapezes auf, das in Strömungsrichtung zunehmend breiter wird. Die Kanten der Erhebungen 20 sind dabei abgerundet.

Die einzelnen Erhebungen 20 sind entlang einer um den Innenkörper 14 wendelartig umlaufenden Linie, die in Figur 4 gestrichelt angedeutet und mit dem Bezugszeichen 32 versehen ist, angeordnet. Insofern sind die Erhebungen 20 zyklisch symmetrisch über die Oberfläche des Innenkörpers 14 verteilt angeordnet.

Der Innenkörper 14, der sich über die gesamte Länge des Absorberrohrs 12 erstreckt, weist an seinen freien Enden konusartig ausgebildete Endabschnitte 34 mit abgerundeten Spitzen auf.

Der in der Figur 5 dargestellte Solarabsorber 40 umfasst ein dem Solarabsorber 10 entsprechendes Absorberrohr 12. Im Absorberrohr 12 ist ein Innenkörper 42 mit Leitabschnitten in Form von einem gewendelten streifen 44 vorgesehen. Auch bei der Figur 5 ist vorgesehen, dass der als Leitabschnitt verwendung findende Wendelstreifen 44 zu dessen Zentrierung an der Innenwandung 26 des Absorberrohrs anliegt.

Der gewendelte Streifen 44 ist dabei vergleichsweise dünn ausgebildet und weist eine geschlossene Oberfläche auf. Gemäß der Erfindung ist allerdings denkbar, dass die geschlossene Oberfläche auch Aussparungen oder Durchbrüche aufweist, so dass das Wärmemittel durch den Streifen 44 hindurchströmen kann.

Anstelle des Wendelstreifens 44 können auch lediglich Streifenabschnitte vorgesehen sein. Diese Streifenabschnitte können gemäß der Erfindung auch schaufelartig ausgebildet sein.

Ein zwischen dem Innenkörper 42 und dem Absorberrohr 12 hindurchströmender Wärmeträger wird folglich vom Wendelstreifen 44 abgelenkt, was zu einer Durchmischung des Wärmeträgers führt. Der Innenkörper 42 samt Wendelstreifen 44 kann bei der Figur 5 als eine Baugruppe ausgebildet sein, die in das als separates Bauteil ausgebildete Absorberrohr 12 einschiebbar ist. Dabei liegt dann die dem Innenkörper 42 abgewandte Außenoberfläche des Wendelstreifens 44 an der Innenwandung des Absorberrohrs 12 an.

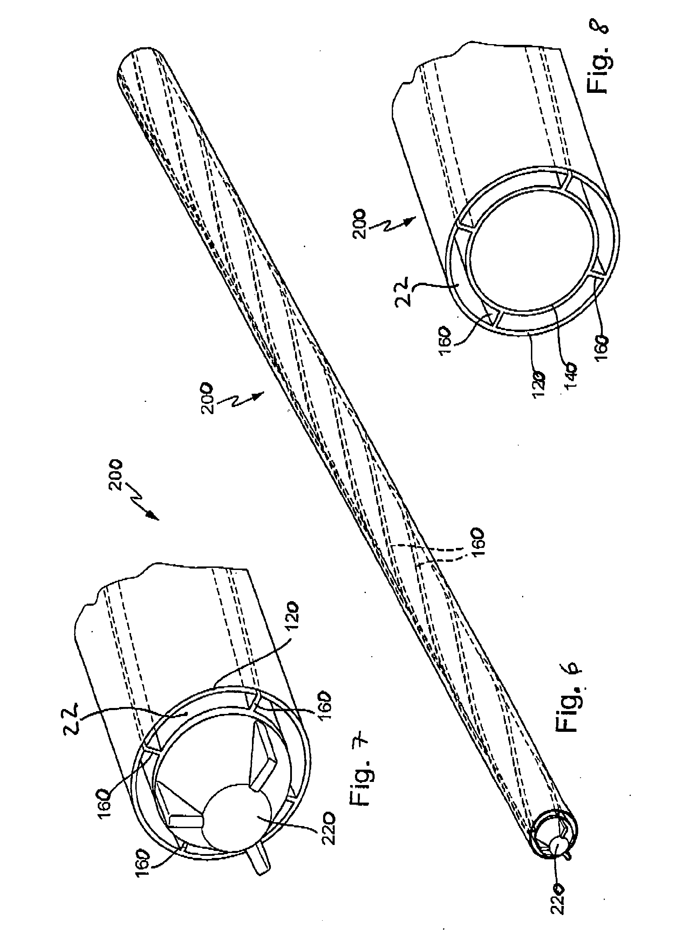

Bei dem in den Figuren 6 bis 8 dargestellten Solarabsorber 200 ist der Innenkörper 140 rohrartig ausgebildet. Zwischen dem Innenkörper 140 und dem Absorberrohr 120 sind insgesamt vier Wendelstreifen 160 vorgesehen, die weitgehend parallel zueinander um die Mittellängsachse gewendelt verlaufen. Die Wendelstreifen 160 sind dabei zwischen dem Innenkörper 140 und dem Absorberrohr 120 in radialer Richtung verlaufend angeordnet. Wie insbesondere aus Figur 7 und 8 deutlich wird, sind jeweils zwei Wendelstreifen 160 einander gegenüberliegend angeordnet; zwei benachbarte Wendelstreifen 160 schließen jeweils einen Winkel von 90° ein.

An den freien Enden sieht der Solarabsorber 200 auf den Innenkörper 140 aufsetzbare, konusartig ausgebildete Endabschnitte 220 vor. Entlang der Oberfläche dieser Endabschnitte 220 kann der Wärmeträger in den Ringspalt zwischen Innenkörper 14 und Absorberrohr 120 einströmen. Aufgrund der insgesamt vier vorgesehenen Wendelstreifen 160, wird der Ringspalt zwischen Innenkörper 14 und Absorberrohr 120 in vier Strömungssegmente unterteilt.

Wie insbesondere aus Figur 8 deutlich wird, sind der Innenkörper 140, die Wendelstreifen 160 und das Absorberrohr 120 einstückig aus dem gleichen KunststoffMaterial hergestellt. Als Kunststoff kann insbesondere ein Kunststoff gewählt werden, der Additive zur verbesserten Absorptionsfähigkeit und Wärmeleitfähigkeit aufweist. Die Herstellung erfolgt insbesondere im Extrusionsverfahren, wobei unmittelbar nach Austritt des extrudierten Materials aus der Matrize das Rohr um seine Mittellängsachse zur Herstellung der Wendel verdreht wird. Insbesondere sind die Wandstärken des Innenkörpers 140, der Wendelstreifen 16 und des Absorberrohrs 120 gleich dick.

Wird der Solarabsorber 200 von einem Wärmeträger durchströmt, so findet eine vorteilhafte Durchmischung des Wärmeträgers aufgrund des Vorhandenseins der Wendelstreifen 160 statt. Die Steigung der Wendelstreifen 160 kann dabei an die Rohrlänge beziehungsweise an die Geometrie der Strömungssegmente angepasst sein.
Die in den Figuren dargestellten Solarabsorber 10, 40 und 200 weisen den Vorteil auf, dass aufgrund der Erhebungen 30 beziehungsweise der gewendelten Streifen 44, 160 eine den Wirkungsgrad des jeweiligen Solarabsorbers erhöhende Durchmischung des Wärmemittels stattfindet.

## Patentansprüche

1. Solarabsorber (10, 40, 200) mit einem Absorberrohr (12, 120) und wenigstens einen im Absorberohr (12, 120) vorgesehenen Innenkörper (14, 42, 140), wobei zwischen dem Innenkörper (14, 42, 140) und dem Absorberrohr (12, 120) wenigstens ein Leitabschnitt (18, 20, 44, 160) zur Durchmischung eines zwischen dem Absorberrohr (12, 120) und dem Innenkörper (14, 42, 140) hindurchströmenden Wärmeträgers vorgesehen ist.

2. Solarabsorber (10, 40, 200) nach Anspruch 1, **dadurch gekennzeichnet, dass** der Leitabschnitt oder mehrere Leitabschnitte (18, 20, 44, 160) entlang einer um die Mittellängsachse gewendelten Linie angeordnet sind.

3. Solarabsorber (10, 20, 200) nach Anspruch 1 oder 2, **dadurch gekennzeichnet, dass** der Innenkörper (14, 42, 140) als koaxial zum Absorberrohr (12, 120) verlaufendes Innenrohr ausgebildet ist.

4. Solarabsorber (10, 20, 200) nach Anspruch 1, 2 oder 3, **dadurch gekennzeichnet, dass** der Innenkörper (14, 42, 140), der wenigstens eine Leitabschnitt (18, 20, 44, 160) und das Absorberrohr (12, 120) einstückig ausgebildet sind.

5. Solarabsorber (10, 40, 200) nach einem der vorherigen Ansprüche, **dadurch gekennzeichnet, dass** der Innenkörper (14, 42, 140) samt Leitabschnitten (18, 20, 44, 160) als vom Absorberrohr (12, 120) getrenntes Bauteil ausgebildet sind, wobei wenigstens einige Leitabschnitte (18, 20, 44, 160) zur Zentrierung des Innenkörpers (14, 42, 140) im Absorberrohr (12, 120) derart ausgebildet sind, dass sie an der Innenwandung (26) des Absorberrohrs (12) anliegen.

6. Solarabsorber (10, 40, 200) nach wenigstens einem der vorhergehenden Ansprüche, **dadurch gekennzeichnet, dass** der Innenkörper (14, 42, 140) einen zylindrischen Grundkörper zur Bildung eines ringartigen Spalts (22) zwischen dem Absorberrohr (12, 120) und dem Innenkörper (14, 42, 140) aufweist und dass die Leitabschnitte (18, 20, 44, 160) zwischen dem Grundkörper und dem Absorberrohr als nach radial außen gerichtete Erhebungen (20) ausgebildet sind.

7. Solarabsorber (10) nach Anspruch 6, **dadurch gekennzeichnet, dass** die Erhebungen (18, 20) im Querschnitt bezüglich der Mittellängsachse (28) jeweils im Bereich zwischen 30 und 120° und insbesondere im Bereich von 90° zueinander versetzte angeordnet sind.

8. Solarabsorber (10) nach Anspruch 6 oder 7, **dadurch gekennzeichnet, dass** sich die Erhebungen (20) in Längsrichtung parallel zur Mittellängsachse (28) erstrecken.

9. Solarabsorber (10) nach einem der Ansprüche 6 bis 8, **dadurch gekennzeichnet, dass** die Erhebungen (20) im Längsschnitt keil- oder rampenartig ausgebildet sind.

10. Solarabsorber (10) nach einem der Ansprüche 6 bis 9, **dadurch gekennzeichnet, dass** die Erhebungen (20) in zur Mittellängsachse (28) senkrecht verlaufender Draufsicht eine rechteckige, trapezförmige oder dreieckige Kontur aufweisen.

11. Solarabsorber (40, 200) nach einem der Ansprüche 1 bis 5, **dadurch gekennzeichnet, dass** der Leitabschnitt oder die Leitabschnitte wenigstens abschnittsweise als Schaufel- oder Wendelstreifen (44, 160) ausgebildeten sind.

12. Solarabsorber (40, 200) nach Anspruch 11, **dadurch gekennzeichnet, dass** der wenigstens eine Wendelstreifen (44, 160) Durchbrüche oder Aussparungen zum Durchtritt für den Wärmeträger aufweist.

13. Solarabsorber (40, 200) nach Anspruch 11 oder 12, **dadurch gekennzeichnet, dass** mehrere Wendelstreifen (160) vorgesehen sind, die weitgehend parallel zueinander um die Mittellängsachse (28) gewendelt verlaufen.

14. Solarabsorber (10, 40, 200) nach wenigstens einem der vorhergehenden Ansprüche, **dadurch gekennzeichnet, dass** das Absorberrohr (12, 120) und/oder der Innenkörper (14, 42, 140) und/oder die Leitabschnitte (18, 20, 44, 160) aus einem Kunststoff enthaltend Additive zur verbesserten Absorptionsfähigkeit und/oder Wärmeleitfähigkeit gebildet sind.

15. Solarkollektor umfassend ein Gehäuse und wenigstens abschnittsweise im Gehäuse unterbrachte Solarabsorber (10, 40, 200) nach wenigstens einem der vorhergehenden Ansprüche.
